# EUROPEAN PATENT APPLICATION

(11) **EP 4 550 376 A1**
(43) Date of publication of application: **07.05.2025**
(21) Application number: 23831021.3
(22) Date of filing: 08.06.2023
(51) Int. Cl.: H01G 9/10, H01G 9/00, H01G 9/02, H01G 9/028

(54) **ELECTROLYTIC CAPACITOR, METHOD FOR MANUFACTURING SAME, AND RETAINING MEMBER**

(30) Priority: 30.06.2022 JP 2022106364
(71) Applicant: Elna Co., Ltd., Tokyo 104-0031 (JP)
(72) Inventor: YONEYA, Naoki, Nishishirakawa-gun, Fukushima 961-8031 (JP); SOMEI, Hidenori, Nishishirakawa-gun, Fukushima 961-8031 (JP)
(74) Representative: Müller-Boré & Partner Patentanwälte PartG mbB
(86) International application number: PCT/JP2023/021374
(87) International publication number: WO 2024/004571

(57) **Abstract**

An electrolytic capacitor includes a capacitor element including anode and cathode foils wound together with a separator being interposed between the anode and cathode foils, a case that houses the capacitor element, a sealing body with which an opening of the case is sealed, and a holding member interposed between the capacitor element and the sealing body, the holding member holding an antioxidant that is more easily oxidized than the sealing body.

## Description

### Technical Field

The present invention relates to an electrolytic capacitor, a method for producing the same, and a holding member.

### Background Art

An electrolytic capacitor has a structure formed by housing a capacitor element including anode and cathode foils wound together with a separator being interposed therebetween in a bottomed cylindrical exterior case and sealing an opening of the exterior case by fitting a sealing body, such as a butyl rubber, to the opening (see, e.g., Patent Literatures 1 and 2). The capacitor element includes an electrolyte solution, and the properties of the electrolytic capacitor may degrade as a result of dry-up or leakage of the electrolyte solution.

### Background Art Literature

### Patent Literature

[Patent Literature 1]: International Publication No. 2017/090241
[Patent Literature 2]: International Publication No. 2020/059091

### Summary of Invention

### Problems to Be Solved by the Invention

The sealing body is slowly oxidized by the action of the oxygen inside the exterior case, the electrolyte solution, or the like. Oxidation of the sealing body is particularly significant when the electrolytic capacitor is used for a prolonged period of time in a high-temperature environment, that is, for example, in the vicinity of an engine or a computer.

When the sealing body becomes degraded by oxidation, cracks are formed in, for example, a portion of the sealing body which comes into contact with the case or a through hole formed in the sealing body through which an electrode terminal is passed. This accelerates dry-up of the electrolyte solution and may result in degradation of the properties of the electrolytic capacitor.

For example, a technique of feeding a fat-soluble antioxidant from the separator to the sealing body is described in Patent Literature 2. However, oxidation of an area of the surface of the sealing body which is not in contact with the separator may fail to be inhibited effectively. Consequently, long-term reliability of the electrolytic capacitor may fail to be maintained at a sufficient level.

The present invention was made in light of the above-described issues, and an object of the present invention is to provide an electrolytic capacitor the reliability of which can be enhanced, a method for producing the same, and a holding member.

### Means for Solving the Problems

An electrolytic capacitor according to the present invention includes a capacitor element including anode and cathode foils wound together with a separator being interposed between the anode and cathode foils, a case that houses the capacitor element, a sealing body with which an opening of the case is sealed, and a holding member interposed between the capacitor element and the sealing body, the holding member holding an antioxidant that is more easily oxidized than the sealing body.

**In** the above electrolytic capacitor, the holding member may be a sheet-shaped member that covers at least a part of a surface of the sealing body.

The above electrolytic capacitor may further include a pair of extraction lead terminals disposed below the capacitor element, the extraction lead terminals each extending from a corresponding one of the anode and cathode foils, wherein the sealing body has a pair of through holes formed therein, through which the respective extraction lead terminals are passed, and the holding member has a pair of insertion holes formed therein, into which the respective extraction lead terminals are inserted.

In the above electrolytic capacitor, the holding member may have a cut formed therein, the cut extending from at least one of the insertion holes to an edge of the holding member.

In the above electrolytic capacitor, a diameter of the insertion holes may be 0.5 to 2 times a diameter of the extraction lead terminals.

The above electrolytic capacitor may further include a pair of extraction lead terminals disposed below the capacitor element, the extraction lead terminals each extending from a corresponding one of the anode and cathode foils, wherein the sealing body has a pair of through holes formed therein, through which the respective extraction lead terminals are passed, and the holding member has a pair of cuts formed therein, through which the respective extraction lead terminals are passed.

In the above electrolytic capacitor, at least one of the cuts may extend to an edge of the holding member.

The above electrolytic capacitor may further include a pair of extraction lead terminals disposed below the capacitor element, the extraction lead terminals each extending from a corresponding one of the anode and cathode foils, wherein the sealing body has a pair of through holes formed therein, through which the respective extraction lead terminals are passed, and the holding member has a pair of cutouts formed therein, the cutouts fitting to the respective extraction lead terminals.

In the above electrolytic capacitor, the separator may have a larger length than the anode foil or the cathode foil in a direction toward the holding member to come into pressure contact with the holding member.

In the above electrolytic capacitor, the antioxidant may include at least one selected from a photooxidation inhibitor, a vitamin antioxidant, an amine antioxidant, a phenolic antioxidant, a phosphorus antioxidant, and a saccharide antioxidant.

In the above electrolytic capacitor, the holding member may contain, as a base material, organic fibers, inorganic fibers, or resin fibers, or may be constituted by a gelatinous medium.

In the above electrolytic capacitor, the holding member may be bonded to the sealing body with an adhesive that swells with an electrolyte solution with which the separator is impregnated.

In the above electrolytic capacitor, the holding member may hold a solution including 2.5 to 20 wt% α-tocopherol serving as the antioxidant.

In the above electrolytic capacitor, the capacitor element may include a conductive polymer layer formed therein.

A method for producing an electrolytic capacitor according to the present invention includes a step of attaching a sealing body to a capacitor element including anode and cathode foils wound together with a separator being interposed between the anode and cathode foils, with a holding member being interposed between the capacitor element and the sealing body, the holding member holding an antioxidant that is more easily oxidized than the sealing body, and a step of housing the capacitor element in a case and sealing an opening of the case with the sealing body.

In the above production method, the capacitor element may include a pair of extraction lead terminals each extending from a corresponding one of the anode and cathode foils and, in the step of sealing the opening of the case with the sealing body, the extraction lead terminals may each be inserted into a corresponding one of a pair of insertion holes formed in the holding member, and the extraction lead terminals inserted in the respective insertion holes may each be passed through a corresponding one of a pair of through holes formed in the sealing body.

In the above production method, the capacitor element may include a pair of extraction lead terminals each extending from a corresponding one of the anode and cathode foils and, in the step of sealing the opening of the case with the sealing body, the extraction lead terminals may each be passed through a corresponding one of a pair of cuts formed in the holding member, and the extraction lead terminals passed through the respective cuts may each be passed through a corresponding one of a pair of through holes formed in the sealing body.

In the above production method, the capacitor element may include a pair of extraction lead terminals each extending from a corresponding one of the anode and cathode foils and, in the step of sealing the opening of the case with the sealing body, the extraction lead terminals may each be fit to a corresponding one of a pair of cutouts formed in the holding member, and the extraction lead terminals fit to the respective cutouts may each be passed through a corresponding one of a pair of through holes formed in the sealing body.

A holding member according to the present invention is included in an electrolytic capacitor including a capacitor element including anode and cathode foils wound together with a separator being interposed between the anode and cathode foils, a case that houses the capacitor element, and a sealing body with which an opening of the case is sealed, the holding member being interposed between the capacitor element and the sealing body, the holding member holding an antioxidant that is more easily oxidized than the sealing body.

In the above holding member, the antioxidant may include at least one selected from a photooxidation inhibitor, a vitamin antioxidant, an amine antioxidant, a phenolic antioxidant, a phosphorus antioxidant, and a saccharide antioxidant.

The above holding member may hold a solution including 2.5 to 20 wt% α-tocopherol serving as the antioxidant.

### Effects of the Invention

According to the present invention, reliability of the electrolytic capacitor can be enhanced.

### Brief Description of the Drawings

[FIG. 1] is a diagram illustrating an example of an aluminum electrolytic capacitor.
[FIG. 2] illustrates a cross section of an aluminum electrolytic capacitor 1 which is taken along the line A-A of FIG. 1.
[FIG. 3] is a perspective view of an example of a capacitor element.
[FIG. 4] is an enlarged view of the portion denoted with the symbol P in FIG. 3.
[FIG. 5] (A) is a plan view of a holding member that has a pair of insertion holes formed therein, (B) is a plan view of a holding member that has a pair of cuts formed therein, (C) is a plan view of a holding member that has a pair of cutouts formed therein, (D) is a plan view of a holding member that has cuts formed therein, the cuts extending to the edge of the holding member, and (E) is a plan view of a holding member that has a pair of insertion holes and cuts formed therein, the cuts extending from the respective insertion holes to the edge of the holding member.
[FIG. 6] is a flowchart illustrating an example of the process for producing an aluminum electrolytic capacitor.
[FIG. 7] is a perspective view illustrating an example of the step of attaching a sealing body to a capacitor element with a holding member being interposed therebetween.
[FIG. 8] is a perspective view illustrating another example of the step of attaching a sealing body to a capacitor element with a holding member being interposed therebetween.
[FIG. 9] is a diagram illustrating changes in the reductions in capacitance determined in Examples and Comparative examples.

### Mode for Carrying Out the Invention

### [Embodiment]

### (Configuration of Aluminum Electrolytic Capacitor)

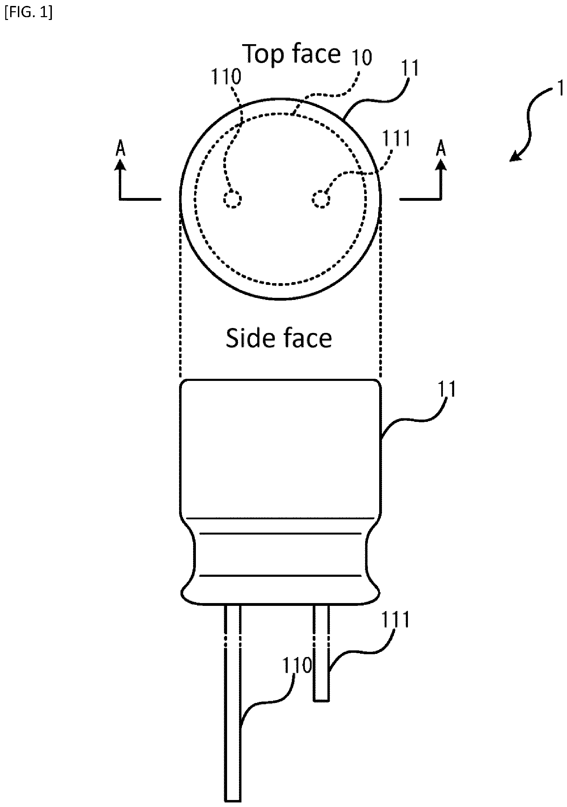

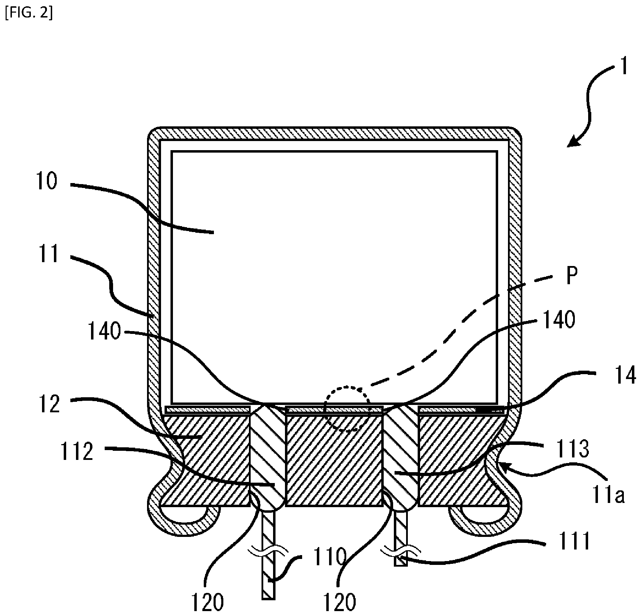

FIG. 1 is a diagram illustrating an example of an aluminum electrolytic capacitor 1. FIG. 1 illustrates the top face and coarse face of the aluminum electrolytic capacitor 1. FIG. 2 illustrates a cross section of the aluminum electrolytic capacitor 1 which is taken along the line A-A of FIG. 1.

The aluminum electrolytic capacitor 1 includes a capacitor element 10, a case 11, a sealing body 12, and a holding member 14. Although the aluminum electrolytic capacitor 1 specifically described herein as an example is a conductive polymer hybrid aluminum electrolytic capacitor, the aluminum electrolytic capacitor 1 is not limited to this. The aluminum electrolytic capacitor 1 is mounted on an electronic circuit board and used for coupling, decoupling, smoothing, or the like.

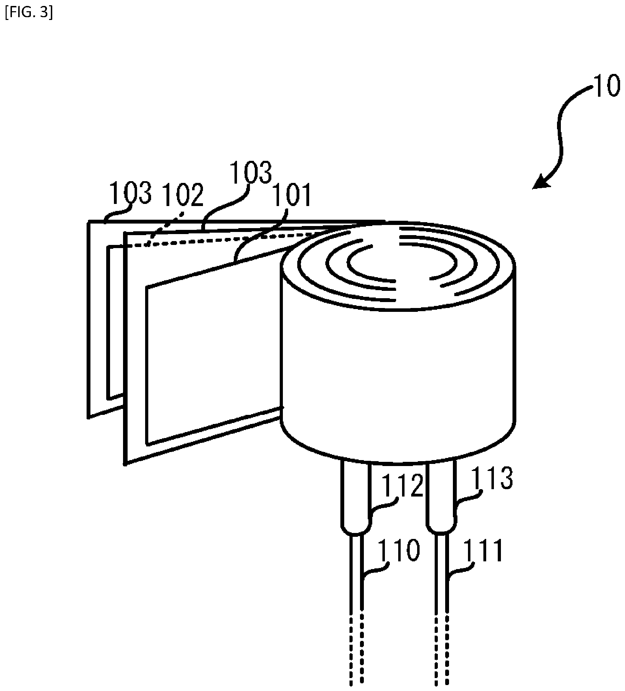

FIG. 3 is a perspective view of an example of a capacitor element 10. The capacitor element 10 includes an anode foil 101, a cathode foil 102, and a separator (electrolytic paper) 103 that are wound together. A pair of extraction lead terminals 112 and 113 are arranged to extend from the bottom of the capacitor element 10. A pair of lead wires 110 and 111 are arranged to extend from round bar-like portions of the respective extraction lead terminals 112 and 113. The extraction lead terminals 112 and 113 are each joined to a corresponding one of the anode and cathode foils by fixing means, such as caulking, and serve as anode and cathode terminals of the aluminum electrolytic capacitor 1. Although a lead-type aluminum electrolytic capacitor 1 is described as an example in this embodiment, it is not limited to this and may be of a surface mount-type.

The anode foil 101 and the cathode foil 102 are formed of, for example, a foil made of a valve metal, such as aluminum, tantalum, titanium, or niobium, or an alloy foil of the valve metal or a vapor-deposited foil, or a foil having active carbon deposited on its surface. The surface of the anode foil 101 is etched in order to increase the electrode area. The anode foil 101 is provided with an anodized film disposed on the surface thereof. Thus, the anode foil 101 is insulated from other members. Since the anodized film serves as a dielectric material, the function of a capacitor can be achieved.

On the other hand, the cathode foil 102 may be provided with an oxide film disposed on the surface thereof as needed. It should be noted that the cathode foil 102 may alternatively be provided with an inorganic layer or a carbon layer disposed on the surface thereof. In such a case, the conductive polymer described below is formed on the surface thereof.

The separator 103 is wound together while being interposed between the anode foil 101 and the cathode foil 102. The separator 103 is made of at least one material selected from celluloses, rayon, glass fibers, and the like. The separator 103 is impregnated with an electrolyte solution and a conductive polymer. Note that the conductive polymer is not used in the case where the aluminum electrolytic capacitor 1 is not a conductive polymer hybrid capacitor.

The electrolyte solution may include a polyhydric alcohol, a sulfone compound, a lactone compound, a carbonate compound, a diether compound of a polyhydric alcohol, a monohydric alcohol, and the like. The above compounds may be used alone or in combination of two or more. Examples of the lactone compound that can be used include γ-butyrolactone and γ-valerolactone. Examples of the carbonate compound that can be used as a solvent include dimethyl carbonate, diethyl carbonate, ethylmethyl carbonate, ethylene carbonate, propylene carbonate, and fluoroethylene carbonate. In particular, ethylene glycol, polyalkylene glycol, γ-butyrolactone, and sulfolane are desirably used.

The electrolyte solution may include a solute. Examples of the solute that can be used include an acid component, a base component, a salt formed of an acid component and a base component, a nitro compound, and a phenolic compound. Also, an organic acid, an inorganic acid, and a complex compound formed of an organic acid and an inorganic acid may also be used. Examples of the organic acid that can be used include carboxylic acids, such as phthalic acid, isophthalic acid, terephthalic acid, maleic acid, succinic acid, glutaric acid, adipic acid, benzoic acid, 4-hydroxybenzoic acid, 1,6-decanedicarboxylic acid, 1,7-octanedicarboxylic acid, and azelaic acid. Examples of the inorganic acid that can be used include boric acid, phosphoric acid, phosphorous acid, hypophosphorous acid, a phosphoric acid ester, and a phosphoric acid diester. Examples of the complex compound formed of an organic acid and an inorganic acid which can be used include borodisalicylic acid, borodioxalic acid, and borodiglycolic acid.

Examples of the base component that can be used include primary to tertiary amines, a quaternary ammonium, and a quaternized amidinium. Examples of the primary to tertiary amines that can be used include methylamine, dimethylamine, trimethylamine, ethylamine, diethylamine, triethylamine, ethylenediamine, aniline, N,N-diisopropylethylamine, tetramethylethylenediamine, and hexamethylenediamine. Examples of the quaternary ammonium that can be used include tetramethylammonium, triethylmethylammonium, and tetraethylammonium. Examples of the quaternized amidinium that can be used include ethyl dimethyl imidazolinium and tetramethyl imidazolinium.

The case 11 is composed of aluminum and has a bottomed cylindrical shape having a closed upper opening. The case 11 covers the capacitor element 10 and the sealing body 12 and serves as an exterior for the aluminum electrolytic capacitor 1. It should be noted that the shape of the case 11 is not limited to cylindrical and may be a polygonal cylinder. Also, the case 11 may be provided with a sleeve or a resin layer formed on the outer surface thereof.

The electrolyte solution may include an absorbent that absorbs a hydrogen gas generated inside the case 11. As an absorbent, p-nitrobenzyl alcohol may be suitably used. Its content is preferably 0.5 to 1.5 wt% in the electrolyte solution. This is because, if the above content is less than 0.5 wt%, the effect of absorbing the hydrogen gas is small and, if the above content is more than 1.5 wt%, the pressure resistance property of the aluminum electrolytic capacitor 1 may become degraded.

The sealing body 12 is a roughly columnar shape member formed of, for example, an elastic member, such as a butyl rubber or a vulcanized rubber, or a phenolic resin member. The sealing body 12 is arranged adjacent to the capacitor element 10 with a holding member 14 being interposed therebetween, the holding member 14 holding an antioxidant. The lower opening of the case 11 is sealed with the sealing body 12. The holding member 14 according to this embodiment is, for example, a sheet-like member, but not limited thereto. The extraction lead terminals 112 and 113 are passed through a pair of through holes 120 formed in the sealing body 12.

The case 11 has a throttling groove 11a formed in the outer peripheral surface of the case 11 in the vicinity of the opening so as to be indented relative to other portions. The throttling groove 11a corresponds to a constriction part of the case 11. As a result of the sealing body 12 being compressed by the throttling groove 11a to a sufficient degree, the opening of the case 11 can be sealed with the sealing body 12 while high airtightness is maintained.

The sealing body 12 is preferably formed of a material having a low swelling ratio with respect to the solvent of the electrolyte solution included in the separator 103 of the capacitor element 10, such as a butyl rubber. For example, in the case where the electrolyte solution includes ethylene glycol, an impurity extracted with ethylene glycol may cause swelling of the sealing body 12. In such a case, the use of a sealing body 12 formed of a butyl rubber reduces the negative impacts on the properties of the aluminum electrolytic capacitor 1. As for the properties of the butyl rubber, for example, it is desirable that the swelling ratio of the butyl rubber immersed in an ethylene glycol solvent having a temperature of 125 (°C) for 2000 hours or more be 2 (wt%).

However, the sealing body 12 is slowly oxidized by the action of oxygen included in the case 11, the electrolyte solution included in the separator, or the like. If the sealing body 12 becomes degraded by oxidation, for example, cracks may be formed in a portion of the sealing body 12 which comes into contact with the case 11 or in which the through holes 120 are formed. This accelerates dry-up of the electrolyte solution and degrades the properties of the aluminum electrolytic capacitor 1. As a result, the reliability of the aluminum electrolytic capacitor 1 may become degraded.

Accordingly, a holding member 14 is interposed between the sealing body 12 and the capacitor element 10. The holding member 14 holds an antioxidant that is more easily oxidized than the sealing body 12. Thus, the holding member 14 inhibits oxidation of the sealing body 12 by feeding antioxidant onto the surface of the sealing body 12. Since antioxidant fed by the holding member 14 is more easily oxidized than the sealing body, oxidation of the sealing body 12 can be inhibited while the antioxidant is oxidized. Consequently, reliability of the aluminum electrolytic capacitor 1 is enhanced. It should be noted that the holding member 14 may be constituted singly by a gelatinous substance.

The antioxidant is preferably, for example, a photooxidation inhibitor, a vitamin antioxidant, an amine antioxidant, a phenolic antioxidant, a phosphorus antioxidant, a saccharide antioxidant, or other components having a reduction action. Also, the antioxidant may be a combination of two or more selected from the above antioxidants. Preferably, it is desirable to use a vitamin, such as a α-tocopherol, an amine antioxidant, such as uric acid, or a phenolic antioxidant, such as hydroquinone, in order to maintain the anti-oxidant function over a long period of time.

Examples of the photooxidation inhibitor include bis(2,2,6,6-tetramethyl-1-(octyloxy)-4-piperidinyl)ester, a reaction product of 1,1-dimethylethylhydroperoxide and octane, bis(1,2,2,6,6-pentamethyl-4-piperidinyl)-[(3,5-bis(1,1-dimethylethyl)-4-hydroxyphenyl)methyl]butyl malonate, 2,4-bis[N-butyl-N-(1-cyclohexyloxy-2,2,6,6-tetramethylpiperidin-4-yl)amino]-6-(2-hydroxyethylamine)-1,3,5-triazine, bis(1,2,2,6,6-pentamethyl-4-piperidinyi) sebacate, and methyl(1,2,2,6,6-pentamethyl-4-piperidinyl) sebacate.

Examples of the vitamin antioxidant include a tocopherol, a tocotrienol, and ascorbic acid.

Examples of the amine antioxidant include uric acid, phenyl-1-naphthylamine, diphenyl-p-phenylenediamine, dipyridylamine, phenothiazine, N,N'-diisopropyl-p-phenylenediamine, N-phenyl-N'-isopropyl-p-phenylenediamine, and dialkyldiphenylamine (DDPA).

Examples of the phenolic antioxidant include 6-di-tert-butyl-p-cresol, 2,6-diphenyl-4-octadecyloxyphenol, stearyl (3,5-di-tert-butyl-4-hydroxyphenyl)propionate, distearyl (3,5-di-tert-butyl-4-hydroxybenzyl)phosphonate, tridecyl-3,5-di-tert-butyl-4-hydroxybenzyl thioacetate, bis[3-(3-tert-butyl-4-hydroxy-5-methylphenyl)propionic acid][ethylenebis(oxyethylene)], thiodiethylene bis[(3,5-di-tert-butyl-4-hydroxyphenyl)propionate], 4,4'-thiobis(6-tert-butyl-m-cresol), and 2-octylthio-4,6-bis(3,5-di-tert-butyl-4-hydroxyphenoxy)-s-triazine.

Examples of the phosphorus antioxidant include triphenyl phosphite, tris(2,4-di-tert-butylphenyl) phosphite, tris(2,5-di-tert-butylphenyl) phosphite, tris(nonylphenyl) phosphite, tris(dinonylphenyl) phosphite, tris(mono-di-mixed nonylphenyl) phosphite, diphenyl acid phosphite, 2,2'-methylenebis(4,6-di-tert-butylphenyl)octylphosphite, diphenyl decyl phosphite, diphenyl octyl phosphite, bis(nonylphenyl)pentaerythritol phosphite, phenyldiisodecyl phosphite, tributyl phosphite, tris(2-ethylhexyl) phosphite, tridecyl phosphite, and trilauryl phosphite.

Examples of the saccharide antioxidant include glucose, arabinose, fructose, maltose, lactose, and sorbitol.

Also, the holding member 14 is preferably a member that includes, for example, an organic medium, such as a polysaccharide (e.g., cellulose, rayon, or agar) or a gelatin; a resin fiber, such as a polypropylene or a polystyrene; an inorganic fiber, such as a glass fiber (e.g., silica glass); or a mixture of any of the above materials as a base material and that holds an antioxidant. The holding member 14 may be constituted singly by a gelatinous substance. Alternatively, a gelatinous substance may be formed on the holding member 14.

Since the holding member 14 is a sheet-shaped member that covers at least a part of the surface of the sealing body 12, the antioxidant can be readily diffused in the surface of the sealing body 12 without changing the height of the aluminum electrolytic capacitor 1. The holding member 14 may be bonded to at least a part of the surface of the sealing body 12 with an adhesive or the like. In the case where a material that swells with an electrolyte solution, such as a polyether, is used as an adhesive, the antioxidant can be diffused inside the adhesive because permeability of the antioxidant in the adhesive is high. It should be noted that the thickness of the holding member 14 is, for example, 5 to 3000 (µm). Specifically, the holding member 14 may have a thickness of 30 to 500 (µm), so that the antioxidant can be fed in a sufficient manner.

The holding member 14 has a pair of insertion holes 140, into each of which a corresponding one of the extraction lead terminals 112 and 113 is inserted. In the production of the aluminum electrolytic capacitor 1, the holding member 14 is attached to the capacitor element 10 while being stacked directly on the sealing body 12. In this step, since the extraction lead terminals 112 and 113 are inserted into the respective insertion holes 140, at least a part of the edges of the insertion holes 140 are drawn into the through holes 120 formed in the sealing body 12. This allows the antioxidant to be fed from the holding member 14 into the through holes 120, and inhibits oxidation of the inside of the through holes 120 with effect.

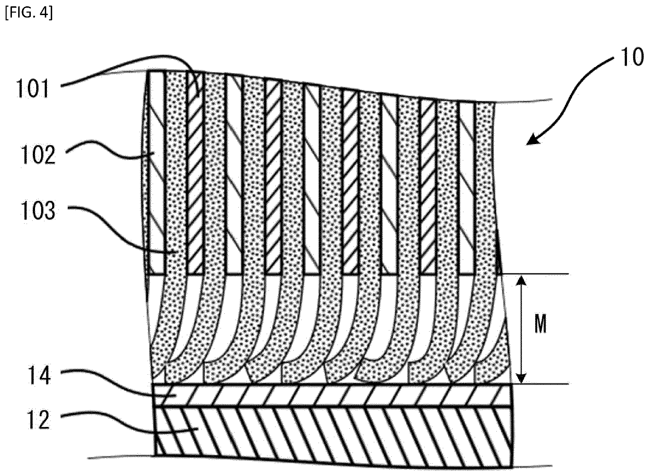

FIG. 4 is an enlarged view of the portion denoted with the symbol P in FIG. 3. In the capacitor element 10, the anode foil 101 and the cathode foil 102 are stacked via the separator 103. The separator 103 has a larger length than the anode foil 101 and the cathode foil 102 in the direction toward the holding member 14 and is arranged to come into pressure contact with the holding member 14.

More specifically, the separator 103 is arranged to protrude from the edges of the anode foil 101 and the cathode foil 102. In the production of the aluminum electrolytic capacitor 1, when the sealing body 12 and the holding member 14 are attached to the capacitor element 10 and the resulting assembly is housed into the case 11, the separator 13 is pressed against the surface of the holding member 14 and becomes bent.

Thus, the separator 103 exerts an elastic force in the height direction of the aluminum electrolytic capacitor 1 to bring the holding member 14 into contact with the surface of the sealing body 12. Consequently, a sufficiently large area of contact between the surfaces of the holding member 14 and the sealing body 12 can be maintained and the antioxidant can be diffused in the surface of the sealing body 12 in a suitable manner accordingly. Note that it is not necessary that the separator 103 be arranged to come into pressure contact with the holding member 14 all over the bottom face of the capacitor element 10; it is only necessary that the separator 103 be arranged to come into pressure contact with the holding member 14 over at least a part of the bottom face of the capacitor element 10 (e.g., 50(%) or more of the area of the surface of the sealing body 12). Also, the length of the portion of the separator 103 which protrudes from the anode foil 101 and the cathode foil 102 is larger than the distance M between the anode foil 101 and the cathode foil 102 and the holding member, and is preferably set to, for example, 0.1 to 4.0 (mm). More specifically, the above length is desirably set to 0.25 to 4.0 (mm), at which breakage of the holding member 14 can be reduced.

The separator 103 may also contain an antioxidant. In such a case, the antioxidant can be fed from the separator 103 to the holding member 14.

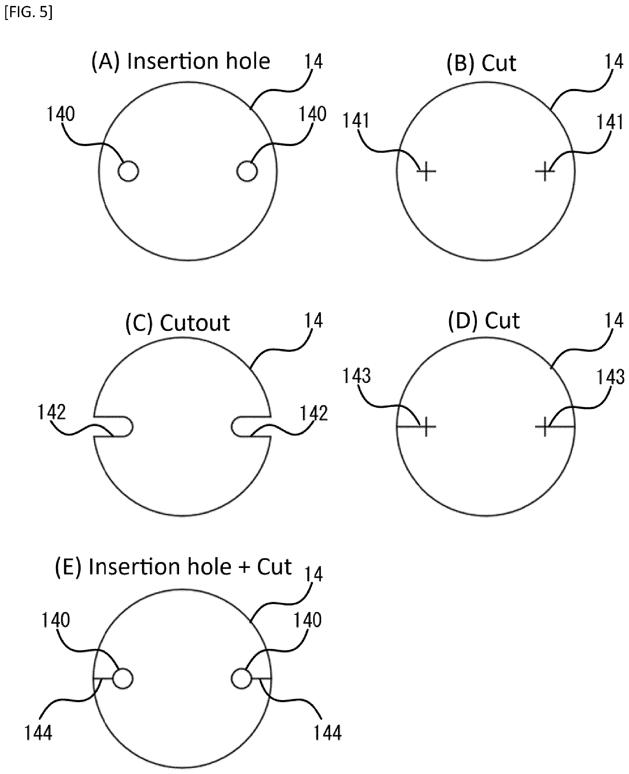

FIGS. 5(A) to (D) illustrate a plurality of examples of the holding member 14. FIG. 5(A) is a plan view of a holding member 14 that has a pair of insertion holes 140 formed therein. The insertion holes 140 have a round shape. Since at least a part of the edges of the insertion holes 140 are drawn into the through holes 120 formed in the sealing body 12 to allow the antioxidant to be fed onto the surface of the wall of the sealing body 12, the insertion holes 140 desirably have a smaller diameter than the extraction lead terminals 112 and 113. For example, the diameter of the insertion holes 140 is preferably set to 0.5 to 2 times the diameter of the extraction lead terminals 112 and 113. Also, the diameter of the holding member 14 may be equal to that of the sealing body 12, and is desirably larger than the diameter of the sealing body 12 with consideration of the deflection of the holding member 14. Note that, even if the holding member 14 has a smaller diameter than the sealing body 12, long-term reliability of the aluminum electrolytic capacitor 1 can be enhanced.

Since the extraction lead terminals 112 and 113 are each inserted into a corresponding one of the insertion holes 140, as described above, at least a part of the edges of the insertion holes 140 are drawn into the through holes 120 formed in the sealing body 12. This allows the antioxidant to be fed from the holding member 14 into the through holes 120, and inhibits oxidation of the inside of the through holes 120 with effect. It should be noted that the shape of the insertion holes 140 is not limited to round and may be, for example, triangular or rectangular.

FIG. 5(B) is a plan view of a holding member 14 that has a pair of cuts 141 formed therein. Although the cuts 141 have, for example, a cross shape, the shape of the cuts 141 is not limited to this. The cuts 141 are cut lines formed in the holding member 14 over the entire thickness. The holding member 14 according to this example, which does not have any hollowed portions formed therein, can hold a larger amount of antioxidant than the holding member 14 that has the insertion holes 140 formed therein.

Since the extraction lead terminals 112 and 113 are each passed through a corresponding one of the cuts 141, at least a part of the edges of the cuts 141 are drawn into the through holes 120 formed in the sealing body 12, as in the case where the insertion holes 140 are formed. This allows the antioxidant to be fed from the holding member 14 into the through holes 120, and inhibits oxidation of the inside of the through holes 120 with effect.

FIG. 5(C) is a plan view of a holding member 14 that has a pair of cutouts 142 formed therein. The cutouts 142 have, for example, a shape formed as a result of the edge of the holding member 14 being cut in roughly a U-shape. The extraction lead terminals 112 and 113 are each fit to a corresponding one of the cutouts 142. The cutouts 142 can provide larger space through which the extraction lead terminals 112 and 113 are passed than the insertion holes 140 or the cuts 141. This makes it easy to attach the holding member 14 to the capacitor element 10 in the production of the aluminum electrolytic capacitor 1.

FIG. 5(D) is a plan view of a holding member 14 that has cuts 143 formed therein, the cuts 143 extending to the edge of the holding member 14. Although the cuts 143 have, for example, a cross shape, the shape of the cuts 143 is not limited to this. The cuts 143 are formed to partially reach the edge of the holding member 14. This makes it easy to pass the extraction lead terminals 112 and 113 through the cuts 143 in the production of the aluminum electrolytic capacitor 1, compared with the aforesaid case where the cuts 141 are formed. Accordingly, the holding member 14 can be easily attached to the capacitor element 10. Alternatively, the holding member 14 may be formed such that only one of the cuts 141 reaches the edge of the holding member 14.

FIG. 5(E) is a plan view of a holding member 14 that has a pair of insertion holes 140 and cuts 144 formed therein, the cuts 144 extending from the respective insertion holes 140 to the edge of the holding member 14. The cuts 144 are arranged to extend from the respective insertion holes 140 to the edge of the holding member 14 in a linear manner. This makes it easy to pass the extraction lead terminals 112 and 113 through the insertion holes 140 in the production of the aluminum electrolytic capacitor 1, compared with the case where only the insertion holes 140 are formed without forming the cuts 144. Accordingly, the holding member 14 can be easily attached to the capacitor element. Alternatively, the cuts 144 may be formed in only one of the insertion holes 140.

### (Process for Producing Aluminum Electrolytic Capacitor)

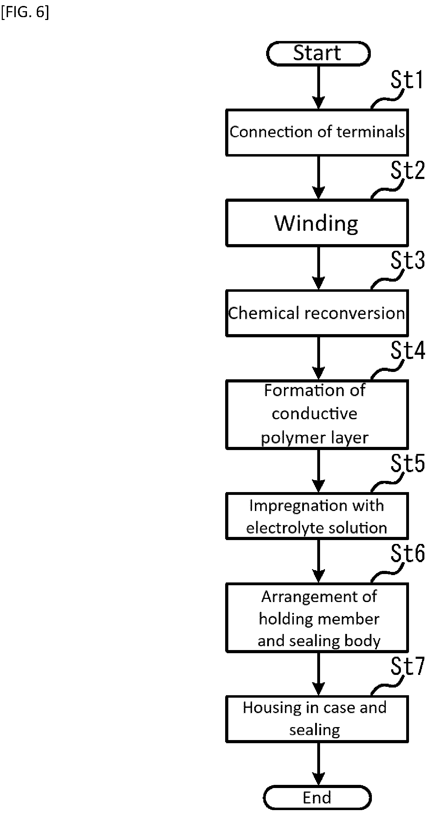

FIG. 6 is a flowchart illustrating an example of the process for producing the aluminum electrolytic capacitor 1. The process for producing the aluminum electrolytic capacitor 1 is an example of the method for producing the electrolytic capacitor.

First, extraction lead terminals 112 and 113 are each connected to a corresponding one of the anode foil 101 and the cathode foil 102 that have been prepared in advance (Step St1). Examples of the joint means include, but are not limited to, caulking.

Next, a separator 103, the anode foil 101, the cathode foil 102, and a separator 103 are stacked in this order, and the resulting multilayer body is wound together, and the outer surface thereof is fixed with a fixing tape. Hereby, a capacitor element 10 is prepared (Step St2).

Next, the capacitor element 10 is subjected to chemical reconversion (Step St3), with which damage of the oxide film disposed on the surface of the anode foil 101 can be repaired. In the chemical reconversion, a chemical conversion coating prepared by dissolving a solute, such as an organic acid salt having a carboxylic group or an inorganic acid salt (e.g., phosphoric acid), in an organic solvent or water is used.

Next, in a reduced-pressure atmosphere, the capacitor element 10 is immersed in a conductive polymer dispersion liquid including water and an organic solvent. Subsequently, the capacitor element 10 is raised from the conductive polymer dispersion liquid (Step St4). Thus, the wound body can be impregnated with a conductive polymer. Note that this step is omitted in the production of a common aluminum electrolytic capacitor 1, that is, an aluminum electrolytic capacitor other than a conductive polymer hybrid aluminum electrolytic capacitor.

Next, in a reduced-pressure atmosphere, the capacitor element 10 is impregnated with a predetermined amount of electrolyte solution (Step St5). It should be noted that the electrolyte solution may be prepared by mixing the conductive polymer dispersion liquid with a solute. In other words, the conductive polymer dispersion liquid can be used as an electrolyte solution. In such a case, impregnation with the electrolyte solution and impregnation with the conductive polymer can be performed simultaneously. Hereby, a capacitor element 10 is completed. The electrolyte solution may include a solution including an antioxidant that is the same as that included in the holding member 14.

Next, a sealing body 12 is attached to the capacitor element 10 with a holding member 14 being interposed therebetween (Step St6). The holding member 14 has been prepared by, for example, immersing a base material composed of, for example, an inorganic fiber, such as a cellulose, a polysaccharide, or a gelatin, or a resin fiber, such as polypropylene and polystyrene, in a solution including an antioxidant in advance. In this step, the holding member 14 may be dried in order to remove the solvent included in the antioxidant solution. Also, the holding member 14 may be prepared by, immersing the above base material in a dispersion liquid prepared by dispersing powder particles or granules of the example antioxidant in a liquid. The holding member 14 further may be impregnated with an electrolyte solution that is the same as that included in the separator 103.

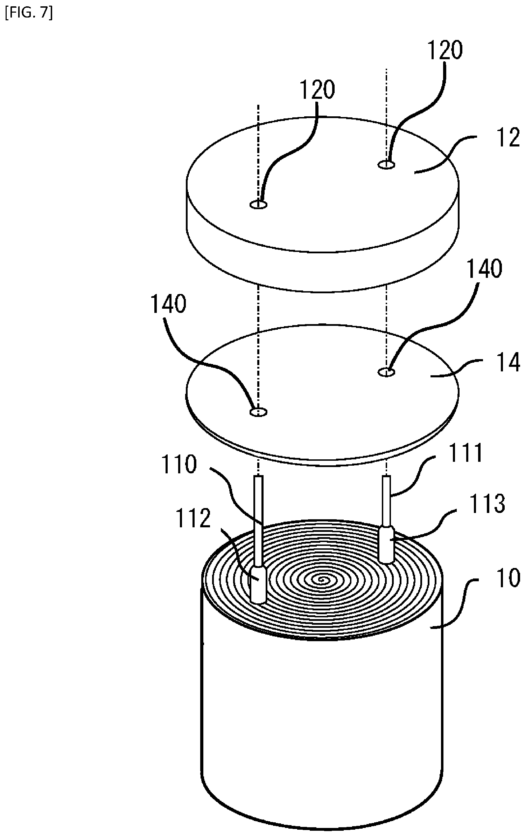

FIG. 7 is a perspective view illustrating an example of the step of attaching the sealing body 12 to the capacitor element 10 with the holding member 14 being interposed therebetween. In this example, the holding member 14 illustrated in FIG. 5(A) is described. The sealing body 12 is disposed on the bottom face of the capacitor element 10 with the holding member 14 being interposed therebetween. In this step, the holding member 14 may be bonded onto the surface of the sealing body 12 with an adhesive, such as polyethylene glycol.

The lead wires 110 and 111 and the extraction lead terminals 112 and 113 are arranged to extend from the bottom surface of the capacitor element 10 downward. Thus, when the sealing body 12 is disposed on the bottom face of the capacitor element 10, the lead wires 110 and 111 and the extraction lead terminals 112 and 113 are each inserted into a corresponding one of a pair of insertion holes 140 formed in the holding member 14 and each passed through a corresponding one of a pair of through holes 120 formed in the sealing body 12. Thus, as described above, at least a part of the edges of the insertion holes 140 are drawn into the through holes 120 of the sealing body 12. This allows the antioxidant to be fed from the holding member 14 to the inside of the through holes 120, and consequently inhibits oxidation of the surfaces of walls of the through holes 120 with effect.

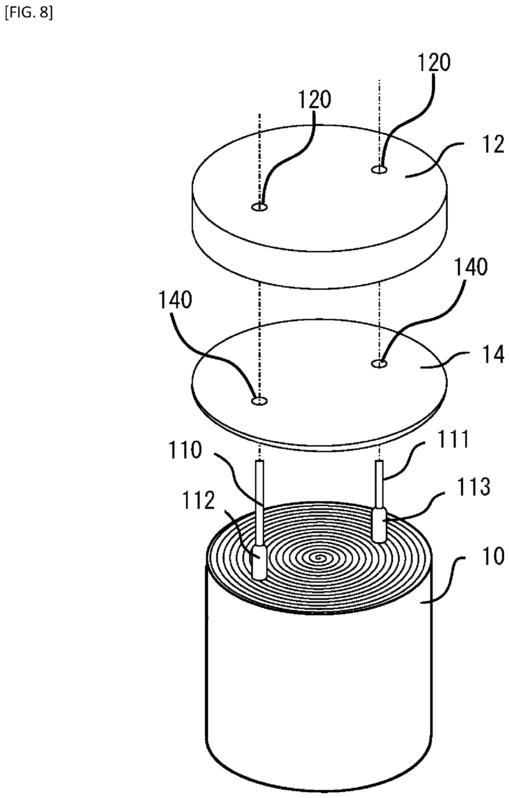

FIG. 8 is a perspective view illustrating another example of the step of attaching the sealing body 12 to the capacitor element 10 with the holding member 14 being interposed therebetween. In this example, the holding member 14 illustrated in FIG. 5(B) is described. The sealing body 12 is disposed on the bottom face of the capacitor element 10 with the holding member 14 being interposed therebetween. At this time, the lead wires 110 and 111 and the extraction lead terminals 112 and 113, the edges of the cuts 141 are drawn into the through holes 120 of the sealing body 12 at lower resistance than the edges of the insertion holes 140. The holding member 14 may be bonded onto the surface of the sealing body 12 with an adhesive, such as polyethylene glycol.

In the stacking step, , the extraction lead terminals 112 and 113 are each passed through a corresponding one of the cuts 141 and further passed through a corresponding one of the through holes 120 formed in the sealing body 12. Thus, as described above, at least a part of the edges of the cuts 141 are drawn into the through holes 120 of the sealing body 12. This allows the antioxidant to be fed from the holding member 14 to the inside of the through holes 120, and consequently inhibits oxidation of the surfaces of walls of the through holes 120 with effect. It should be noted that the holding members 14 illustrated in FIGS. 5(D) and 5(E) can be attached to the capacitor element 10 in the same manner as described above.

Also, in the case where the holding member 14 illustrated in FIG. 5(C) is used, in the stacking step, the extraction lead terminals 112 and 113 are each fit to a corresponding one of the cutouts 142 and each passed through a corresponding one of the through holes 120 formed in the sealing body 12. Therefore, as described above, it becomes easy to attach the holding member 14 to the capacitor element in the production of the aluminum electrolytic capacitor 1.

Referring back to FIG. 6, subsequent to the attachment of the sealing body 12, the capacitor element 10 is housed into a case 11 and sealed with the sealing body 12 (Step St7). The aluminum electrolytic capacitor 1 can be prepared in the above-described manner.

### Examples

Next, examples of the aluminum electrolytic capacitor 1 are described below. Aluminum electrolytic capacitors 1 of Example Nos. 1 to 24 according to the above embodiment were prepared. The aluminum electrolytic capacitors 1 prepared in Example Nos. 1 to 12 were common electrolytic capacitors including an electrolyte solution that did not include a conductive polymer, while the aluminum electrolytic capacitors 1 prepared in Example Nos. 13 to 24 were conductive polymer hybrid aluminum electrolytic capacitors including an electrolyte solution that included a conductive polymer. Also, for comparison, aluminum electrolytic capacitors of Comparative Example Nos. 1 to 3 which did not include the holding member 14 were also prepared.

In Examples and Comparative Examples, the rated voltage of the aluminum electrolytic capacitor 1 was 25 (V), and the rated capacitance of the aluminum electrolytic capacitor 1 was 470 (µF). Also, the diameter of the case 11 was 10 (mm). The height of the case 11 was 10 (mm).

### (Example No. 1)

An anode foil 101 was prepared, and an anode extraction lead terminal 112 was connected thereto. A cathode extraction lead terminal 113 was connected to the edge to a cathode foil 102 that included a conductor layer and that had been subjected to a pretreatment for improving wettability. Subsequently, a separator 103, the cathode foil 102, a separator 103, and the anode foil 101 were stacked in this order, and the resulting multilayer body was wound together such that the extraction lead terminals 112 and 113 were entangled in the winding. Then, the outer surface of the winding was fixed in place with a tape. Hereby, a capacitor element 10 was prepared. The lengths of upper and lower portions of the separators which protruded from the anode foil 101 and the cathode foil 102 were both 0.25 (mm). Also, a cellulose paper sheet having a thickness of 60 (µm) was prepared as a holding member 14.

As an electrolyte solution, a γ-butyrolactone solution including 35 (wt%) 1,2,3,4-tetramethylimidazolinium phthalate was prepared. In a reduced-pressure atmosphere, the capacitor element 10 was immersed in the electrolyte solution. A base material of the holding member 14 was impregnated in a γ-butyrolactone solution including 10 (wt%) (±)-α-tocopherol used as an antioxidant. Note that the holding member 14 had a shape as illustrated in FIG. 5(A). The holding member 14 and the sealing body 12, through which the extraction lead terminals 112 and 113 and the lead wires 110 and 111 were passed, were attached to the capacitor element 10. The case 11 was sealed with the sealing body 12 such that the capacitor element 10 was housed in the case 11. The aluminum electrolytic capacitor 1 was prepared in the above-described manner.

### (Example No. 2)

The production method was changed from that used in Example No. 1 in terms of the following point: the base material of the holding member 14 was impregnated in the above electrolyte solution including 10 (wt%) (±)-α-tocopherol.

### (Example No. 3)

The production method was changed from that used in Example No. 1 in terms of the following points: the capacitor element 10 was immersed in the electrolyte solution including 10 (wt%) (±)-α-tocopherol; and, after the holding member 14 that had not been impregnated with an antioxidant had been attached to the capacitor element 10, the holding member 14 was impregnated with the electrolyte solution fed from the separator 103 included in the capacitor element 10.

### (Example No. 4)

The production method was changed from that used in Example No. 1 in terms of the following point: after the base material of the holding member 14 had been immersed in a γ-butyrolactone solution including 10 (wt%) (±)-α-tocopherol, the solvent, that is, γ-butyrolactone, was removed from the holding member 14 by drying.

### (Example No. 5)

The production method was changed from that used in Example No. 1 in terms of the following point: the base material of the holding member 14 was impregnated in a γ-butyrolactone solution including 2.5 (wt%) (±)-α-tocopherol.

### (Example No. 6)

The production method was changed from that used in Example No. 1 in terms of the following point: the base material of the holding member 14 was impregnated in a γ-butyrolactone solution including 20 (wt%) (±)-α-tocopherol.

### (Example No. 7)

The production method was changed from that used in Example No. 1 in terms of the following point: the base material of the holding member 14 was impregnated in a γ-butyrolactone solution including 10 (wt%) uric acid.

### (Example No. 8)

The production method was changed from that used in Example No. 1 in terms of the following point: the base material of the holding member 14 was impregnated in a γ-butyrolactone solution including 10 (wt%) hydroquinone.

### (Example No. 9)

The production method was changed from that used in Example No. 1 in terms of the following point: the holding member 14 had the shape illustrated in FIG. 5(D).

### (Example No. 10)

The production method was changed from that used in Example No. 1 in terms of the following point: the holding member 14 was bonded to the surface of the sealing body 12 with polyethylene glycol that served as an adhesive.

### (Example No. 11)

The production method was changed from that used in Example No. 1 in terms of the following point: the holding member 14 was formed on the surface of the sealing body 12 in the form of a gel including (±)-α-tocopherol.

### (Example No. 12)

The production method was changed from that used in Example No. 1 in terms of the following point: the separator 103 was impregnated with an antioxidant that was the same as that included in the holding member 14.

### (Example No. 13)

The production method was changed from that used in Example No. 1 in terms of the following points: prior to the immersion in the electrolyte solution, the capacitor element 10 was subjected to chemical reconversion in an aqueous ammonium phosphate solution while a voltage of 50(V) was applied; subsequent to the cleaning and drying of the capacitor element 10, the capacitor element 10 was immersed in a PEDOT/PSS (poly(3,4-ethylenedioxythiophene) polystyrene sulfonate) dispersion liquid, which is a conductive polymer, in an atmosphere the pressure of which was reduced from atmospheric pressure by 0.97 (MPa); a γ-butyrolactone solution including 35 (wt%) 1,2,3,4-tetramethylimidazolinium phthalate was prepared as an electrolyte solution; and, in a reduced-pressure atmosphere, the capacitor element 10 was immersed in the electrolyte solution. Hereby, a conductive polymer hybrid aluminum electrolytic capacitor was obtained.

### (Example No. 14)

The production method was changed from that used in Example No. 13 in terms of the following point: the base material of the holding member 14 was impregnated in the above electrolyte solution including 10 (wt%) (±)-α-tocopherol.

### (Example No. 15)

The production method was changed from that used in Example No. 13 in terms of the following points: the capacitor element 10 was immersed in the electrolyte solution including 10 (wt%) (±)-α-tocopherol; and, after the holding member 14 that had not been impregnated with an antioxidant had been attached to the capacitor element 10, the holding member 14 was impregnated with the electrolyte solution fed from the separator 103 included in the capacitor element 10.

### (Example No. 16)

The production method was changed from that used in Example No. 13 in terms of the following point: after the base material of the holding member 14 had been immersed in a γ-butyrolactone solution including 10 (wt%) (±)-α-tocopherol, the solvent, that is, γ-butyrolactone, was removed from the holding member 14 by drying.

### (Example No. 17)

The production method was changed from that used in Example No. 13 in terms of the following point: the base material of the holding member 14 was impregnated in a γ-butyrolactone solution including 2.5 (wt%) (±)-α-tocopherol.

### (Example No. 18)

The production method was changed from that used in Example No. 13 in terms of the following point: the base material of the holding member 14 was impregnated in a γ-butyrolactone solution including 20 (wt%) (±)-α-tocopherol.

### (Example No. 19)

The production method was changed from that used in Example No. 13 in terms of the following point: the base material of the holding member 14 was impregnated in a γ-butyrolactone solution including 10 (wt%) uric acid.

### (Example No. 20)

The production method was changed from that used in Example No. 13 in terms of the following point: the base material of the holding member 14 was impregnated in a γ-butyrolactone solution including 10 (wt%) hydroquinone.

### (Example No. 21)

The production method was changed from that used in Example No. 13 in terms of the following point: the holding member 14 had the shape illustrated in FIG. 5(D).

### (Example No. 22)

The production method was changed from that used in Example No. 13 in terms of the following point: the holding member 14 was bonded to the surface of the sealing body 12 with polyethylene glycol that served as an adhesive.

### (Example No. 23)

The production method was changed from that used in Example No. 13 in terms of the following point: the holding member 14 was formed on the surface of the sealing body 12 in the form of a gel including (±)-α-tocopherol.

### (Example No. 24)

The production method was changed from that used in Example No. 13 in terms of the following point: the separator 103 was impregnated with an antioxidant that was the same as that included in the holding member 14.

### (Comparative Example No. 1)

The production method was changed from that used in Example No. 1 in terms of the following point: the holding member 14 was not attached to the capacitor element 10.

### (Comparative Example No. 2)

The production method was changed from that used in Example No. 13 in terms of the following point: the holding member 14 was not attached to the capacitor element 10.

### (Comparative Example No. 3)

The production method was changed from that used in Example No. 1 in terms of the following points: the holding member 14 was not attached to the capacitor element 10; and the separator 103 was impregnated with an antioxidant.

### (Evaluations)

A rated voltage (25(V)) was applied to each of the aluminum electrolytic capacitors 1 prepared in Example Nos. 1 to 24 and the aluminum electrolytic capacitors prepared in Comparative Example Nos. 1 to 3 under atmosphere at 130(°C), and the capacitance C(µF) of the aluminum electrolytic capacitor was measured 5000 hours and 8000 hours after application of the voltage had been started. The initial capacitance of the aluminum electrolytic capacitor 1 prior to the evaluation test was defined as Co(µF), changes in capacitance 5000 hours and 8000 hours after the application of the voltage had been started were defined as ΔC (<0)(µF), and the capacitance reduction (%), that is, ΔC/Co, was calculated as an evaluation parameter.

**[Table 1]**

| No. | Concentration of α-tocopherol (wt%) | ΔC/Co | |
|---|---|---|---|
| | | After 5000 hours | After 8000 hours |
| 1 | 10 | -10.1 | -13.1 |
| 2 | 10 | -10.6 | -13.9 |
| 3 | 10 | -10.5 | -14.1 |
| 4 | 10 | -10.6 | -14.6 |
| 5 | 2.5 | -10.5 | -14.3 |
| 6 | 20 | -10.5 | -14.5 |
| 7 | 0 | -10.5 | -14.3 |
| 8 | 0 | -10.5 | -14.2 |
| 9 | 10 | -10.9 | -15.3 |
| 10 | 10 | -10.7 | -14.4 |
| 11 | 10 | -10.4 | -13.7 |
| 12 | 10 | -10.5 | -14.1 |

Table 1 lists the results of evaluations of the aluminum electrolytic capacitors 1 prepared in Example Nos. 1 to 12, that is, capacitance reduction (%) after 5000 hours and 8000 hours. Also, among Examples Nos. 1 to 12, for the aluminum electrolytic capacitors 1 using (±)-α-tocopherol as an antioxidant, the concentrations of the solution thereof are shown.

**[Table 2]**

| No. | Concentration of α-tocopherol (wt%) | ΔC/Co | |
|---|---|---|---|
| | | After 5000 hours | After 8000 hours |
| 13 | 10 | -9 | -10.9 |
| 14 | 10 | -9.2 | -10.7 |
| 15 | 10 | -9 | -11.3 |
| 16 | 10 | -9.3 | -12.2 |
| 17 | 2.5 | -9.1 | -11.7 |
| 18 | 20 | -9.4 | -11.5 |
| 19 | 0 | -9.2 | -10.6 |
| 20 | 0 | -9.3 | -10.9 |
| 21 | 10 | -9.2 | -10.9 |
| 22 | 10 | -9.2 | -10.7 |
| 23 | 10 | -9.1 | -11.2 |
| 24 | 10 | -9.28 | -10.8 |

Table 2 lists the results of evaluations of the aluminum electrolytic capacitors 1 prepared in Example Nos. 13 to 24, that is, capacitance reduction (%) after 5000 hours and 8000 hours. Table 2 also lists, among Example Nos. 13 to 24, for the aluminum electrolytic capacitors 1 using (±)-α-tocopherol as an antioxidant, the concentrations of the solution thereof are shown.

**[Table 3]**

| Comparative Examples | | |
|---|---|---|
| No. | ΔC/Co | |
| | After 5000 hours | After 8000 hours |
| 1 | -23 | -100 |
| 2 | -20 | -100 |
| 3 | -12.6 | -19 |

Table 2 lists the results of evaluations of the aluminum electrolytic capacitors 1 prepared in Comparative Example Nos. 1 to 3, that is, capacitance reduction (%) after 5000 hours and 8000 hours.

As is understood from Tables 1 to 3, the reduction in the capacitance of each of the aluminum electrolytic capacitors 1 prepared in Example Nos. 1 to 24 was lower than that of any of the aluminum electrolytic capacitors prepared in Comparative Example Nos. 1 to 3. This is because, since the holding member 14 was interposed between the capacitor element 10 and the sealing body 12, the antioxidant held by the holding member 14 was fed onto the surface of the sealing body 12 and oxidation of the sealing body 12 was inhibited as a result of oxidation of the antioxidant.

Also, a comparison between the reductions in the capacitances of the aluminum electrolytic capacitors 1 prepared in Example Nos. 1 to 12 and the reductions in the capacitances of the aluminum electrolytic capacitors 1 prepared in Example Nos. 13 to 24 confirms that the reductions measured in Example Nos. 1 to 12 were higher. This is because the conductive polymer has a function of holding the electrolyte solution. Thus, conductive polymer hybrid aluminum electrolytic capacitors that include a separator 103 impregnated with a conductive polymer more effectively inhibiting oxidation of the sealing body 12.

As is also understood from Tables 1 and 2, for the aluminum electrolytic capacitors 1 using (±)-α-tocopherol as an antioxidant, the concentration of the solution thereof is preferably 2.5 to 20 (wt%).

Also, capacitance reduction could be inhibited compared with Comparative Example Nos. 1 to 3 even when the equipment of the holding member 14 was immersed in an electrolyte solution including an antioxidant as in Example Nos. 2 and 12. In addition, capacitance reduction could be inhibited compared with Comparative Example Nos. 1 to 3 even when the holding member 14 was impregnated with antioxidant fed from the separator 103 as in Example Nos. 3 and 15. Further, capacitance reduction could be inhibited compared with Comparative Example Nos. 1 to 3 even when a solvent of antioxidant, which was fed from the separator 103 and with which the holding member 14 was impregnated, was removed as in Example Nos. 4 and 16.

Also, capacitance reduction could be inhibited compared with Comparative Example Nos. 1 to 3 even when an antioxidant other than (±)-α-tocopherol was used as in Example Nos. 7, 8, 19, and 20. In addition, capacitance reduction could be inhibited compared with Comparative Example Nos. 1 to 3 even when the shape of the holding member 14 was changed as in Example Nos. 9 and 21. Further, capacitance reduction could be inhibited compared with Comparative Example Nos. 1 to 3 even when the holding member 14 was bonded onto the surface of the sealing body 12 with an adhesive as in Example Nos. 10 and 22.

Also, capacitance reduction could be inhibited compared with Comparative Example Nos. 1 to 3 even when the holding member 14 was composed of a gel as in Example Nos. 11 and 23. In addition, capacitance reduction could be inhibited compared with Comparative Example Nos. 1 to 3 even when the separator 103 was impregnated with an antioxidant that was the same as that included in the holding member 14 as in Example Nos. 12 and 24.

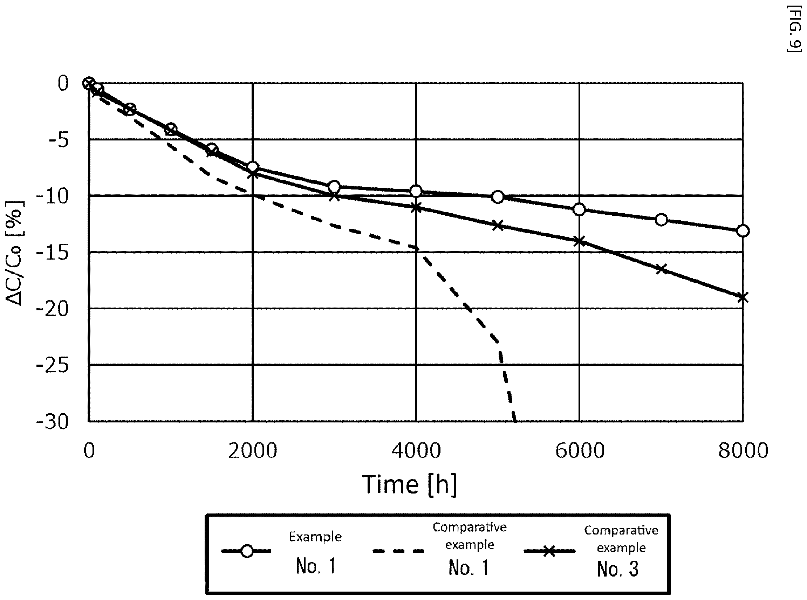

FIG. 9 is a diagram illustrating changes in the reductions in capacitance determined in Example No. 1 and Comparative Example Nos. 1 and 3. The horizontal and vertical axes of the graph illustrated in FIG. 9 represent time (h) and reduction (ΔC/Co)(%), respectively.

The difference between the reductions determined in Example No. 1 and Comparative Example No. 1 was larger than the difference between the reductions determined in Example No. 1 and Comparative Example No. 3. Since the aluminum electrolytic capacitor prepared in Comparative Example No. 3 included a separator impregnated with an antioxidant, oxidation of the sealing body was inhibited, and therefor, the reduction was smaller than in Comparative Example No. 1.

However, in Comparative Example No. 3, since an antioxidant was included in the separator together with the electrolyte, it was difficult to feed a sufficient amount of antioxidant. Moreover, since the separator was in direct contact with the sealing body, the electrolyte solution was likely to flow to the sealing body. Consequently, it was not possible to inhibit oxidation of the sealing body with effect, compared with Example No. 1.

As described above, the aluminum electrolytic capacitor 1 according to this embodiment, the method for producing the same, and the holding member 14 reduce the likelihood of the electrolyte solution included in the separator 103 of the capacitor element 10 coming into direct contact with the sealing body 12 and inhibit oxidation of the sealing body 12 by feeding antioxidant onto the surface of the sealing body 12. This inhibits degradation of the properties of the aluminum electrolytic capacitor 1.

Examples of the present invention are described in detail above. It should be noted that the present invention is not limited by the specific examples, and various modifications and changes can be made within the scope of the present invention which is described in the claims.

## Claims

1. An electrolytic capacitor comprising:
a capacitor element including anode and cathode foils wound together with a separator being interposed between the anode and cathode foils;
a case that houses the capacitor element;
a sealing body with which an opening of the case is sealed; and
a holding member interposed between the capacitor element and the sealing body, the holding member holding an antioxidant that is more easily oxidized than the sealing body.

2. The electrolytic capacitor according to Claim 1, **characterized in that** the holding member is a sheet-shaped member that covers at least a part of a surface of the sealing body.

3. The electrolytic capacitor according to Claim 1 or 2, **characterized by** comprising:
a pair of extraction lead terminals disposed below the capacitor element, the extraction lead terminals each extending from a corresponding one of the anode and cathode foils,
wherein the sealing body has a pair of through holes formed therein, through which the respective extraction lead terminals are passed, and
the holding member has a pair of insertion holes formed therein, into which the respective extraction lead terminals are inserted.

4. The electrolytic capacitor according to Claim 3, **characterized in that** the holding member has a cut formed therein, the cut extending from at least one of the insertion holes to an edge of the holding member.

5. The electrolytic capacitor according to Claim 3, **characterized in that** a diameter of the insertion holes is 0.5 to 2 times a diameter of the extraction lead terminals.

6. The electrolytic capacitor according to Claim 1 or 2, **characterized by** comprising:
a pair of extraction lead terminals disposed below the capacitor element, the extraction lead terminals each extending from a corresponding one of the anode and cathode foils,
wherein the sealing body has a pair of through holes formed therein, through which the respective extraction lead terminals are passed, and
the holding member has a pair of cuts formed therein, through which the respective extraction lead terminals are passed.

7. The electrolytic capacitor according to Claim 6, **characterized in that** at least one of the cuts extends to an edge of the holding member.

8. The electrolytic capacitor according to Claim 1 or 2, **characterized by** comprising:
a pair of extraction lead terminals disposed below the capacitor element, the extraction lead terminals each extending from a corresponding one of the anode and cathode foils,
wherein the sealing body has a pair of through holes formed therein, through which the respective extraction lead terminals are passed, and
the holding member has a pair of cutouts formed therein, the cutouts fitting to the respective extraction lead terminals.

9. The electrolytic capacitor according to Claim 1 or 2, **characterized in that** the separator has a larger length than the anode foil or the cathode foil in a direction toward the holding member to come into pressure contact with the holding member.

10. The electrolytic capacitor according to Claim 1 or 2, **characterized in that** the antioxidant includes at least one selected from a photooxidation inhibitor, a vitamin antioxidant, an amine antioxidant, a phenolic antioxidant, a phosphorus antioxidant, and a saccharide antioxidant.

11. The electrolytic capacitor according to Claim 1 or 2, **characterized in that** the holding member contains, as a base material, organic fibers, inorganic fibers, or resin fibers, or is constituted by a gelatinous medium.

12. The electrolytic capacitor according to Claim 1 or 2, **characterized in that** the holding member is bonded to the sealing body with an adhesive that swells with an electrolyte solution with which the separator is impregnated.

13. The electrolytic capacitor according to Claim 1 or 2, **characterized in that** the holding member holds a solution including 2.5 to 20 wt% α-tocopherol serving as the antioxidant.

14. The electrolytic capacitor according to Claim 1 or 2, **characterized in that** the capacitor element includes a conductive polymer layer formed therein.

15. A method for producing an electrolytic capacitor, the method **characterized by** comprising:
a step of attaching a sealing body to a capacitor element including anode and cathode foils wound together with a separator being interposed between the anode and cathode foils, with a holding member being interposed between the capacitor element and the sealing body, the holding member holding an antioxidant that is more easily oxidized than the sealing body; and
a step of housing the capacitor element in a case and sealing an opening of the case with the sealing body.

16. The method for producing an electrolytic capacitor according to Claim 15, **characterized in that**:
the capacitor element includes a pair of extraction lead terminals each extending from a corresponding one of the anode and cathode foils; and
in the step of sealing the opening of the case with the sealing body,
the extraction lead terminals are each inserted into a corresponding one of a pair of insertion holes formed in the holding member, and
the extraction lead terminals inserted in the respective insertion holes are each passed through a corresponding one of a pair of through holes formed in the sealing body.

17. The method for producing an electrolytic capacitor according to Claim 15, **characterized in that**:
the capacitor element includes a pair of extraction lead terminals each extending from a corresponding one of the anode and cathode foils; and
in the step of sealing the opening of the case with the sealing body,
the extraction lead terminals are each passed through a corresponding one of a pair of cuts formed in the holding member, and
the extraction lead terminals passed through the respective cuts are each passed through a corresponding one of a pair of through holes formed in the sealing body.

18. The method for producing an electrolytic capacitor according to Claim 15, **characterized in that**:
the capacitor element includes a pair of extraction lead terminals each extending from a corresponding one of the anode and cathode foils; and
in the step of sealing the opening of the case with the sealing body,
the extraction lead terminals are each fit to a corresponding one of a pair of cutouts formed in the holding member, and
the extraction lead terminals fit to the respective cutouts are each passed through a corresponding one of a pair of through holes formed in the sealing body.

19. A holding member included in an electrolytic capacitor **characterized by** including a capacitor element including anode and cathode foils wound together with a separator being interposed between the anode and cathode foils, a case that houses the capacitor element, and a sealing body with which an opening of the case is sealed,
the holding member being interposed between the capacitor element and the sealing body, the holding member holding an antioxidant that is more easily oxidized than the sealing body.

20. The holding member according to Claim 19, **characterized in that** the antioxidant includes at least one selected from a photooxidation inhibitor, a vitamin antioxidant, an amine antioxidant, a phenolic antioxidant, a phosphorus antioxidant, and a saccharide antioxidant.

21. The holding member according to Claim 19 or 20, **characterized by** containing, as a base material, organic fibers, inorganic fibers, or resin fibers, or being constituted by a gelatinous medium.

22. The holding member according to Claim 19 or 20, **characterized by** holding a solution including 2.5 to 20 wt% α-tocopherol serving as the antioxidant.
